# EUROPEAN PATENT SPECIFICATION

(11) **EP 3 816 238 B1**
(45) Date of publication and mention of the grant of the patent: **12.04.2023**
(21) Application number: 19206998.7
(22) Date of filing: 04.11.2019
(51) Int. Cl.: C09B 5/62, B41M 3/14, C09B 67/22

(54) **POLYPARAPERYLENE DERIVATIVES AND METHODS FOR MAKING SAME**
POLYPARAPERYLENDERIVATE UND VERFAHREN ZUR HERSTELLUNG DAVON
DÉRIVÉS DE POLYPARAPARYLÈNE ET LEURS PROCÉDÉS DE FABRICATION

(43) Date of publication of application: 05.05.2021
(73) Proprietor: TEXTILCHEMIE DR. PETRY GMBH, 72770 Reutlingen (DE)
(72) Inventor:
(74) Representative: Hoeger, Stellrecht & Partner Patentanwälte mbB

(56) References cited:
- WO-A1-2007/006717
- CN-A- 104 418 856
- US-A1- 2010 059 716
- GEERTS Y ET AL: "QUATERRYLENEBIS(DICARBOXIMIDE)S: NEAR INFRARED ABSORBING AND EMITTING DYES", JOURNAL OF MATERIALS CHEMISTRY, ROYAL SOCIETY OF CHEMISTRY, GB, vol. 8, no. 11, 1 November 1998 (1998-11-01), pages 2357-2369, XP000803180, ISSN: 0959-9428, DOI: 10.1039/A804337J
- YULIAN ZAGRANYARSKI ET AL: "Facile Transformation of Perylene Tetracarboxylic Acid Dianhydride into Strong Donor-Acceptor Chromophores", ORGANIC LETTERS, vol. 14, no. 21, 2 November 2012 (2012-11-02), pages 5444-5447, XP055047589, ISSN: 1523-7060, DOI: 10.1021/ol302519q
- Yin ET AL: "Carbon-Carbon Coupling Reactions Catalyzed by Heterogeneous Palladium Catalysts", Chemical Reviews, vol. 107, no. 1, 1 January 2007 (2007-01-01), pages 133-173, XP055016873, ISSN: 0009-2665, DOI: 10.1021/cr0505674

## Description

The present invention relates to a method for making polyparaperylene derivatives.

### BACKGROUND OF THE PRESENT INVENTION

Perylene based chromophores are high performance colorants which are widely used in common industrial applications. In recent decades, they have become more and more attractive for other high-tech applications, such as organic electronics and photonics, bio-imaging and medical therapy. On the other hand, polyparaperylenes, such as quaterrylene derivatives, gain further interest as outstanding near-infrared (NIR) absorbers for security coating, laser-welding, laser-printing, heat managing, thermotherapy, and photoacoustic imaging.

The design and preparation of polyparaperylene based chromophores, especially, economic methods to produce such organic metal-free NIR compounds, which are proven to be great candidates for specific applications, are a hot area of research for both academics and industries.

WO 2007/006717 A1 discloses rylene derivatives of general formula (I) in which the rylene contains a polycyclic conjugated ring system, which contains at least one perylene unit (formula II), can contain heteroatoms as ring atoms, can be functionalized by groupings containing CO- groups and/or can carry other substituents different from radicals A; A represents a radical of formula (III); X represents oxygen or sulfur; R represents the same or different radicals: optionally substituted alkyl, cycloalkyl, aryl, hetaryl, -U-aryl, U representing a grouping - O-, -S-, -NR²-, -CO-, -SO- or -SO₂-, or C₁-C₁₂ alkoxy, C₁-C₆ alkylthio, -C=CR², - CR²=CR²₂, hydroxy, mercapto, halogen, cyano, nitro, -NR³R⁴, -NR³COR⁴, -CONR³R⁴, -SO₂NR³R⁴, -COOR³ or -SO₃R³; R¹ represents the same or different radicals; hydrogen or one of the radicals R; R² represents hydrogen or alkyl, radicals R² being able to be the same or different when repeatedly occurring; R³ and R⁴, independent of one another, represent hydrogen, optionally, substituted alkyl, aryl or hetaryl, and; n represents 1 to 8.

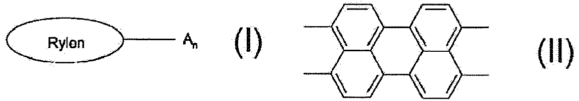

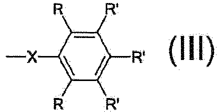

US 2010/0059716 A1 relates to processes for preparing pentarylene- and hexa-rylenetetracarboximides or mixtures thereof, to pentarylene and hexarylene-tetracarboximides having a high degree of substitution, and to their use.

Yves Geerts et al., Quaterrylenebis(dicarboximide)s: near infrared absorbing and emitting dyes, J. of Materials Chemistry 1998, Vol. 8(11), pages 2357-2369, describe quaterrylenebis(dicarboxdiimide)s which, despite their extended -system, exhibit good solubility in organic solvents and film forming properties when adequately substituted.

Yulian Zagranyarski et al., Facile Transformation of Perylene Tetracarboxylic Acid Dianhydride into Strong Donor-Acceptor Chromophores, Organic Letters 2012, Vol. 14(21), pages 5444-5447, describe a synthesis of 9,10-dibromo-1,6,7,12-tetrachloro-perylene-3,4-dicarboxylic acid monoimides from easily available 1,6,7,12-tetrachloro-perylene-3,4,9,10-tetracarboxylic acid dianhydride. Therefrom, perylene monoimides with pronounced donor-acceptor character were obtained via twofold aromatic amination. The halogen substituents in the 1,6,7,12-positions of perylene were removed under basic conditions.

Lunxiang Yin et al., Carbon-Carbon Coupling Reactions Catalyzed by Heterogenous Palladium Catalysts, Chem. Rev. 2007, vol. 107, pages 133 - 173, provides an overview over a large amount of publications relating to carbon-carbon coupling reactions making use of Pd catalysts.

WO 2013/068275 A1 describes the preparation of polymer-bonded perylene, terrylene or quaterrylene tetracarboxylic acid diimides via brominated or chlorinated perylene, terrylene or quaterrylene tetracarboxylic acid diimides.

EP 0 596 292 A1 describes for the first time the preparation of quaterrylene tetracarboxylic acid diimides by means of cyclo-dehydrogenation of bis-perylene dicarboximides with a strong base, such as KOH. The bis-perylene dicarboximides were made by Ni-catalyzed Yamamoto homo-coupling of 9-bromoperylene dicarboximides, which were prepared via a three-step reaction starting from 3,4,9,10-perylene-tetracarboxylic acid dianhydride.

WO 2006/021307 A1 (EP 1 789 415 B1) describes a way to directly prepare quaterrylene tetracarboxylic acid diimide from a perylene-3,4-dicarboximide in the presence of a strong base, e.g., potassium tert-butoxide.

WO 96/22332 A1 (EP 0 804 507 B1) describes the preparation of substituted quaterrylene tetracarboxylic acid diimides via the bromination of perylene-3,4-dicarcoximide and subsequently coupling same to a bis-perylene compound. The bis-perylene compound is reacted in the presence of an oxidant to quaterrylene tetracarboxylic acid diimide which may subsequently be subjected to a phenoxy-lation reaction.

DE 10 2005 021362 A1 describes the preparation of substituted quaterrylene diamidines by imidization of quaterrylene dianhydrides.

WO 2014/033620 A2 discloses the preparation of specific halogenated quaterrylene compounds.

WO 2006/117383 A1 (EP 1 879 847 B1) describes the synthesis of derivatives of quaterrylene tetracarboxylic acid diimides via saponification by strong bases and subsequent imidization reaction with mono- and multi-amine containing compounds.

Polymer-bonded quaterrylene dyes and printing ink compositions containing same are described in WO 2012/160182 A1.

CN 104418856 A describes the preparation of octachloro-substituted quaterrylene tetracarboxylic acid diimides via a Pd-catalyzed homo-coupling reaction of 1,6,7,12-tetrachloro-9,10-dibromo-perylene dicarboximides.

WO2006/111511 A1 describes the preparation of hexarylene and pentarylene tetracarboxylic acid diimides via a multi-step reaction based on the synthesis of terrylene compounds and Pd-catalysts.

WO 2008/052927 A1 describes the synthesis of heptarylene and octarylene tetracarboxylic acid diimides based on a multi-step reaction with the preparation of terrylene and quaterrylene and Pd-catalysts.

The object of the present invention is to provide a method for preparing a substituted polyparaperylene, (including quaterrylene, hexarylene, and octarylene) tetracarboxylic acid diimide or a derivative thereof in an efficient way.

### SUMMARY OF THE INVENTION

The present invention provides a process for the preparation of polyparaperylene compounds of formulae (IIa) and (IIb) as set out in claim 1 as well as of formulae (Ia) and (Ib) as set out in claim 2, respectively.

The substituted polyparaperylene tetracarboxylic acid derivatives defined above may be obtained as the major product of the process of the present invention in a reaction mixture which further may comprise minor amounts of polyparaperylene tetracarboxylic acid diimides or derivatives, i.e., about 20 % by weight or less, preferably 5 % by weight or less.

The present invention provides inter alia the following advantages over the prior art:
The process according to the present invention is not affected by the quality of the starting material, i.e., the degree of purity of the perylene tetracarboxylic acid dianhydride of formula (1), e.g., 1,6,7,12-tetrachloro-perylene tetracarboxylic acid dianhydride (CI4PDA). Consequently, even lower quality CI4PDA products that may contain up to 20 % by weight of 1,5,6,7,12-penta-chloro-perylene tetracarboxylic acid dianhydride (CI5PDA, as reported in Organic Letters, 2015, 17, page 1882) may be used as a starting material, and nevertheless both of the CI5PDA and CI4PDA may be essentially fully reacted in the process of the present invention to yield a compound of formulae (IIa) and (IIb) and subsequently of formulae (Ia) and (Ib). Thus, the starting material CI4PDA is readily available from a plurality of providers.

Due to the preparation of substituted polyparaperylene tetracarboxylic acid diimides or derivatives starting off from CI4PDA, no further halogenation is needed before effecting the introduction of the substituents on the polyparaperylene tetracarboxylic acid diimides and its derivatives.

WO 96/22332 A1 (corresponding to EP 0 804 507 B1) describes the bromination of 1 equivalent of quaterrylene tetracarboxylic acid diimide by using more than 50 equivalents of bromine.

According to the present invention, however, only about 2 to about 2.5 equivalents of bromine are needed for converting 1 equivalent of CI4PDA to 9,10-dibro-mo-1,6,7,12-tetrachloro-perylenedicarboximide. After the reaction is completed, typically essentially all of the bromine is consumed. Therefore, there is no necessity to quench bromine after the termination of the reaction. Thus, the process according to the present invention is more economical and environmental friendly.

WO 2014/147525 A2 describes the substitution of bromine of 9,10-dibromo-1,6,7,12-tetrachloro-perylenedicarboximide relying on Pd-catalysts only. Additionally, there is no report regarding the substitution of chloride atoms except for dechlorination of the resulting compounds.

According to the present invention, more environment friendly and low cost Cu-based catalysts (Cu(0)-based catalysts) are used for the coupling reaction to yield a polyparaperylene compound. A specific example for such catalyst is Cu powder.

For similar purposes, CN 104418856 A describes Pd-catalyzed coupling reactions. However, Cu-catalysts preferably used in accordance with the present invention are cheaper and more environment-friendly. Additionally, the present invention provides for a similar coupling reaction yields which are nearly quantitative, i.e., much higher than the best yield reported in CN 104418856 A, namely 49 %.

Further, according to the present invention substituted polyparaperylene tetracarboxylic acid derivatives can be prepared having an absorption maximum at longer wavelengths. The inventive polyparaperylene (including quaterrylene) compounds advantageously show an absorption maximum at a wavelength of about 750 nm or above. Therefore, they can provide a better performance in applications such as heat management, thermotherapy, and photoacoustic imaging.

In addition, according to the present invention substituted polyparaperylene tetracarboxylic acid derivatives can be prepared with less reaction steps and higher reaction yields than by the methods reported in DE 10 2005 021362 A1.

According to the present invention polymer-bonded polyparaperylene (including quaterrylene) tetracarboxylic acid derivatives can be easily prepared in the presence of Cu-catalysts (a specific example for such catalyst is Cu powder) with a nearly quantitative yield.

A further advantage provided by the present invention over the teaching of WO 2012/160182 A1 resides in that the present invention provides the possibility to have a broader range of polymers (e.g., polymers containing arylhydroxy, arylthiol, and arylamine groups) bonded to quaterrylenes, which provides them with a better processibility.

A further aspect disclosed relates to the use of a polyparaperylene compound as a near-infrared (NIR) absorber in security coatings, compositions designed for laser-welding, laser-printing, heat management, thermotherapy, and photoacoustic imaging. The use of the polyparaperylene compounds also encompasses IR absorbing polymer films and plastics plates.

### DETAILED DESCRIPTION OF THE INVENTION

The present invention provides a process for preparing polyparaperylene based compounds according to formulae (IIa) and (IIb) which may also serve as an intermediate for the manufacture of the compound of formulae (Ia) and (Ib) 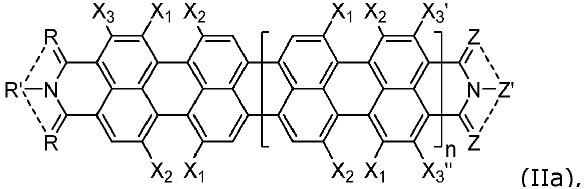 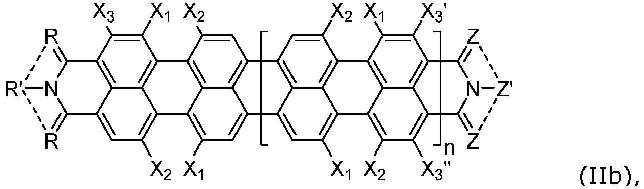 wherein n is 1, 2 or 3; wherein R and Z individually represent O, N, or CH; wherein R' and Z' individually represent
(i) C₁-C₂₃-alkyl including linear, branched, cyclic, dendritic alkyl groups, and/or alkyl groups interrupted by single or multiple moieties selected from -O-, -S-, -NR¹-, -COO-, -CO-, -CR¹=CR¹-, -N=CR¹-, -C=C-, -SO-, -SO₂-, -OP=OOR¹O-, -OSi(OR¹)₂O-, -Si(R¹)₂O-, -Si(R¹)₂OSi(R¹)₂-, and -CONR¹-, said alkyl groups may be mono- or multi-substituted by moieties selected from hydroxyl, thiol, halogen, nitro, -NR¹R², -CON(R¹)₂, -NR¹COR², -SO₂N(R¹)₂, -COOR¹, -SO₃R¹, and -PO(R¹)₂;
(ii) aryl which may be mono- or multi-substituted by moieties selected from C₁-C₂₀-alkyl, C₁-C₂₀-alkoxy, cyano, -COOR¹,
   -CON(R¹)₂, nitro, alkylthio, aryl, and heteroaryl, each of which may be mono- or multi-substituted by C₁-C₁₀-alkyl and/or C₁-C₁₀-alkoxy;
   wherein R¹ and R² represent identical of different aryl groups or C₁-C₈-alkyl or -alkoxy linear or branched chains;

or wherein R' and Z' and one or two of R and Z, respectively, represent together a cyclic moiety as represented by the broken lines in formula (II);
wherein the cyclic moiety results of the condensation reaction between NH₂/CH₃ goups as part of R'-NH₂ as well as Z'-NH₂ and C=O groups of formula (2) releasing one H₂O as defined in the appended claims; and
wherein X₃, X₃' and X₃" are hydrogen, when X₁=Cl and X₂=H or X₁=X₂=Cl.

In case of X₁=X₂=Cl, the preferred starting material for producing such polyparaperylene is a commercially available product, however, most of the commercial products are not pure and contain an amount of pentachloroperylenedianhydride, possibly X₃, X₃' or X₃" being Cl and not hydrogen. Contents of up to about 20 wt% of such pentachloroperylenedianhydride may be tolerated in the starting material according to the present invention.

The substituent X₃, X₃' or X₃" is hydrogen and the ratio of chlorine is not essential for the targeted optical and electronic properties of the polyparaperylene compounds and therefore may be tolerated. The acceptability of additional chlorine substituents allows the use of lower priced starting material available on the market for the production of the inventive compounds.

Still a further preferred polyparaperylene based compound prepared according to the present invention is represented in the following formula (IIc). 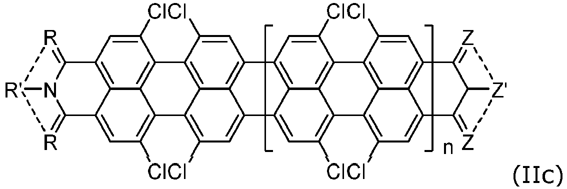
wherein n is 1, 2 or 3.
R, R', Z, Z' are as defined above for formulae (IIa) and (IIb).

The compounds of the formulae (IIa), (IIb), and (IIc) may be useful as such, but - as mentioned above - also provide a suitable starting material for producing further modified polyparaperylene compounds of formulae (Ia) and (Ib), the properties of which may be adapted to the needs of various applications as will be shown in some specific examples below.

The present invention also provides a process as defined in claim 1 wherein the compound of formulae (IIa) and (IIb) is reacted under Ullmann conditions in the presence of OH-, SH- and NH₂-containing compounds to yield the compound of formulae (Ia) and (Ib): 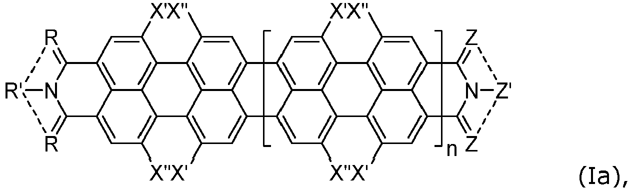 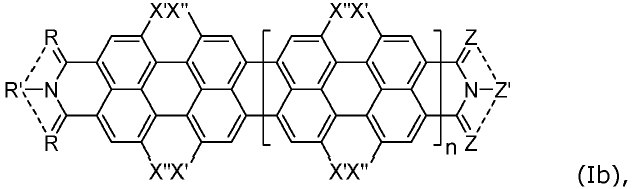 X' and X" are independently selected from
hydrogen; chlorine; alkoxyl, aryloxy, heteroaryloxy, alkylthio, arylthio, heteroarylthio, alkylamino, arylamino, or heteroarylamino, which may each be subsitituted by C₁-C₁₂-alkyl or C₁-C₁₂-alkoxy; and a polymeric group containing alkyloxy or alkylthio.

Especially preferred polyparaperylene compounds of formulae (III), (VII) and (VIII) as well as mixtures (IV), (V) and (VI) of such compounds prepared according to the present invention are exemplified below:
Compounds (III) 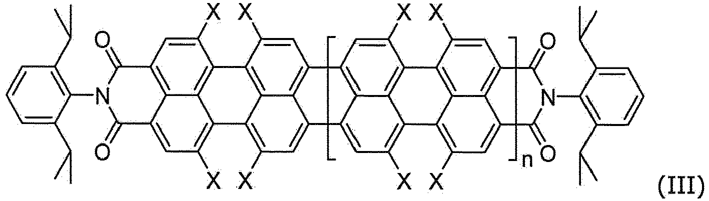
   For compounds (IIIa)
      n is 1, 2 or 3; X is individually chloro or 4-(tert-octyl)phenoxy.
   For compounds (IIIb)
      n is 1, 2 or 3; X is individually chloro or phenoxy.
   For compounds (IIIc)
      n is 1, 2 or 3; X is individually chloro or 4-(methoxy)phenoxy.
   For compounds (IIId)
      n is 1, 2 or 3; X is individually chloro or a sodium salt of a polymer resulting from the reaction of hydroxybenzenesulfonic acid/formaldehyde/sulfonylbis-(phenol) (CAS90218-44-3).
Mixtures (IV) 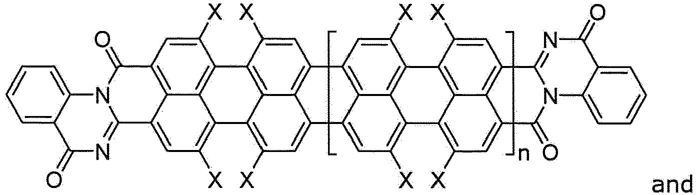 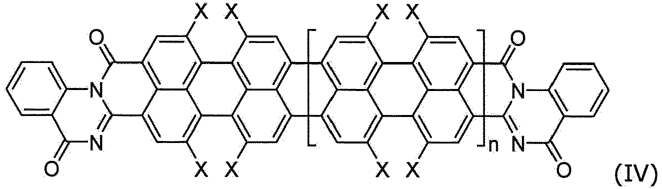
   For Mixture (IVa)
      n is 1, 2 or 3; X is chloro.
   For Mixture (IVb)
      n is 1, 2 or 3; X is individually chloro or 4-(tert-octyl)phenoxy.
Mixtures (V) 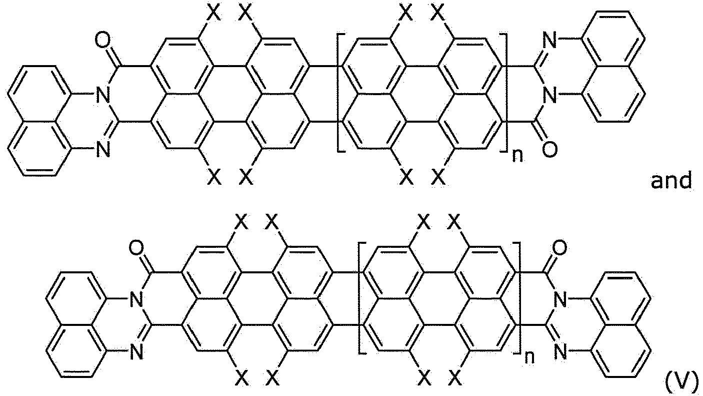
   For Mixture (Va)
      n is 1, 2 or 3; X is chloro.
   For Mixture (Vb)
      n is 1, 2 or 3; X is individually chloro or 4-(tert-octyl)phenoxy.
Mixtures (VI) 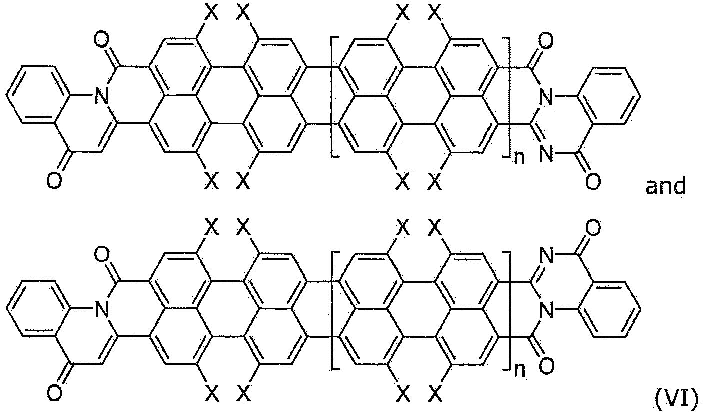
   For Mixture (VIa)
      n is 1, 2 or 3; X is chloro.
   For Mixture (VIb)
      n is 1, 2 or 3; X is individually chloro or 4-(tert-octyl)phenoxy.
Compounds (VII) 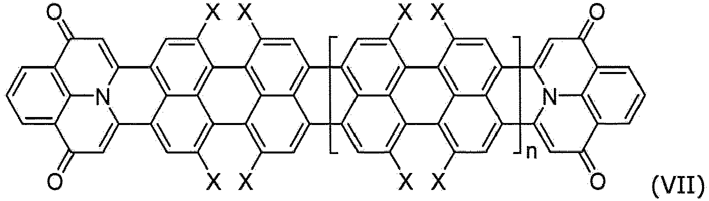
   For compound (VIIa)
      n is 1, 2 or 3; X is chloro.
   For compounds (VIIb)
      n is 1, 2 or 3; X is individually chloro or 4-(tert-octyl)phenoxy.
Compounds (VIII) 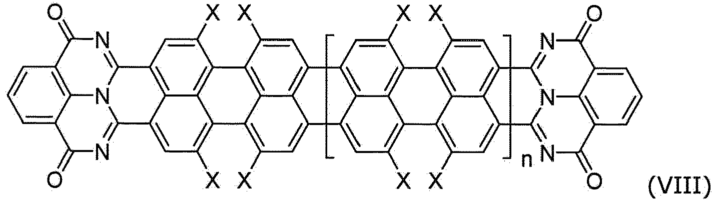
   For compound (VIIIa)
      n is 1, 2 or 3; X is chloro.
   For compounds (VIIIb)
      n is 1, 2 or 3; X is individually chloro or 4-(tert-octyl)phenoxy.

As noted above, a further aspect of the present invention resides in a process for preparing the inventive polyparaperylene based compounds of formulae (Ia), (Ib) and (IIa), (IIb) as set out in claims 5 and 6, respectively, as well as compounds of formula (IIc).

The process according to the present invention starts off from a paraperylene based compound of formula (1) 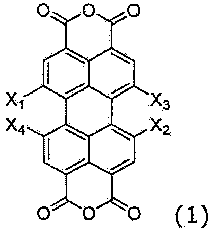 and comprises a step of brominating same.

The groups X₁, X₂, X₃, X₄ equal Cl, Cl, H, H, respectively, or Cl, Cl, Cl, Cl. The latter compound, i.e., 1,6,7,12-tetrachloro-perylene tetracarboxylic acid dianhydride, is represented by formula (1a).

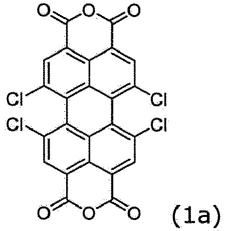

Brominating of the paraperylene of formula (1) provides for a reaction mixture of brominated perylene compounds of the formulae (2) and (3) 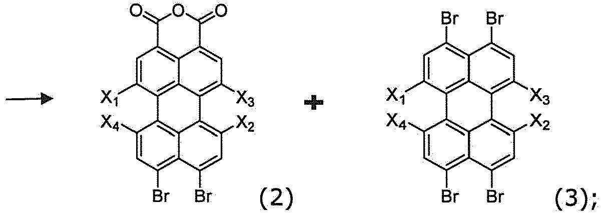 wherein in compounds (2) and (3) X₁, X₂, X₃, X₄ equal Cl, Cl, H, H, respectively, or Cl, Cl, Cl, Cl.

The bromination providing a mixture of the compounds of the formulae (2) and (3) may be carried out according to the teaching of WO 2014/033620 A1, WO 2014/147525 A2, or Organic Letters 2012 page 5444 (both of which are incorporated by reference herein in their entirety), however preferably with optimized reaction conditions as will be detailed below:
Generally, 1 equivalent (eq) of the compound of formula (1) is dissolved in an alkali water solution comprising 5 wt% (about 4 to about 12 eq, preferably about 8 eq) of an alkali such as NaOH and KOH. The reaction mixture is heated, e.g., to a temperature in the range from about 50 °C to about 95 °C, preferably about 90 °C, until the compound of formula (1) is completely dissolved. Under such condition, the pH of the solution will be typically about 10.5 and the compound of formula (1) is essentially completely converted to a tetrametal salt.

Then about 2 to about 6 eq (preferably about 6 eq) of acid (such as CH₃COOH, HCl, HBr, and H₃PO₄ in an aqueous solution) are added to the reaction mixture such that an excess of about 2 eq of alkali is retained. After about 3 to about 4 hours, dimetal salts are formed. The temperature of the reaction mixture is in the range from about 50 °C to about 95 °C, preferably about 90 °C.

Bromine (in amount of about 2 to about 2.5 eq, preferably about 2.1 eq) is then added dropwise to the reaction mixture at a temperature in the range of about 25 °C to about 95 °C, preferably about 90 °C. After about 30 min, the reaction product is obtained as a precipitate containing compounds of formula (2) and eventually of formula (3) and is separated by filtration, washed with water and dried for further reactions.

Compound of formula (2) is a versatile building block and can react with different amines, including anilines and alkylamines. In the reaction product, a small amount of compound of formula (3) is present, which is an important compound for the synthesis of polyparaperylene compound of formula (I) since it provides a means for determining the parameter n.

Subsequently said mixture of compounds of the formulae (2) and (3) is subjected to a reaction with an amine of the formula R'-NH₂ and Z'-NH₂ in a solvent to yield the mixture of compounds of formulae (4a), (4b) and (3) (the temperature of the reaction mixture is in the range of about 90 °C to about 210 °C).

Additionally, when R'-NH₂ and Z'-NH₂ contain in addition one or two -NH₂ groups or -CH₃ groups, R or Z are N or CH forming a part of an additional ring formation obtained by a condensation reaction between NH₂/CH₃ groups as part of R'-NH₂ as well as Z'-NH₂ and C=O groups of formula (2) releasing one H₂O. 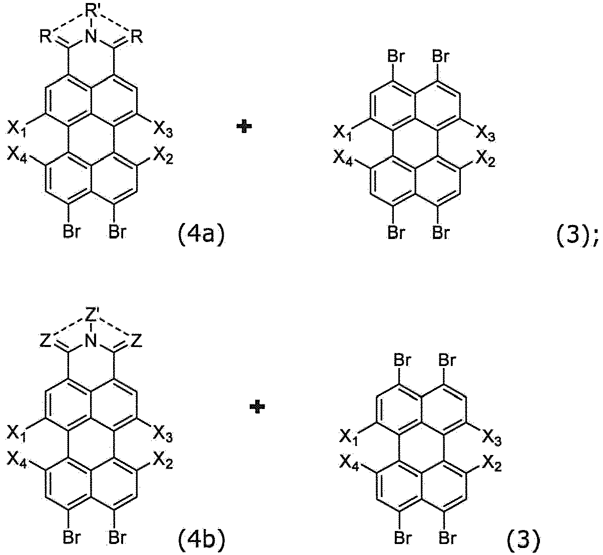 wherein in the compound of formulae (4a), (4b) the two substituents R and Z, respectively, are selected independently from O, N, and CH; whereas the substituent R' and Z' are selected from aryl and alkyl groups or from O-, S, N-, P-, Si-containing aryl and alkyl groups as specified above for the formulae (Ia) and (Ib) already.

Examples of the compound of formulae (4a)/(4b) are shown below

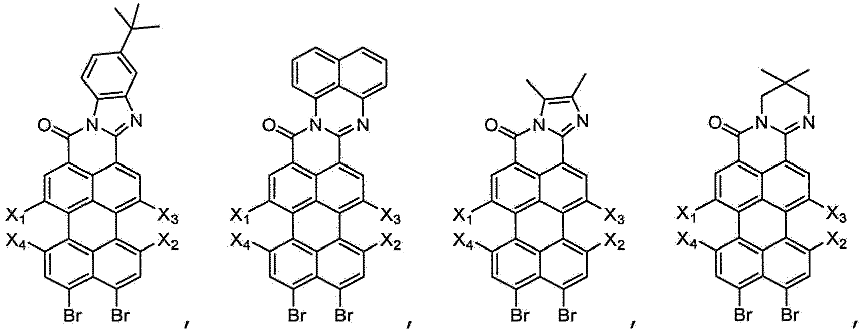

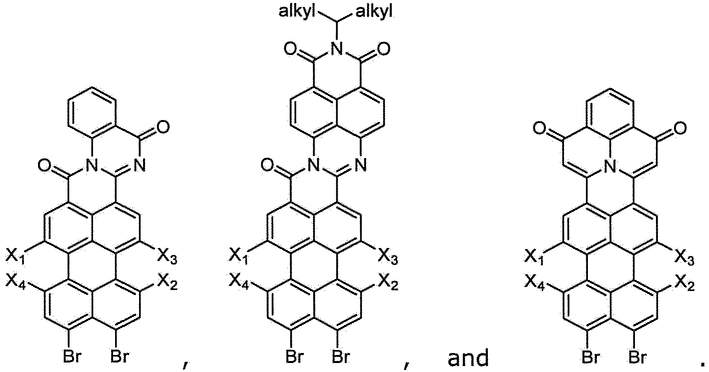

The above indicated alkyl term represents an alkyl group selected from C₂-C₁₅ linear or branched alkyls.

The mixture of compounds of formulae (3) and (4a)/(4b) may be prepared according to WO 2014/033620 A1, WO 2014/147525 A2, or Organic Letters 2012 page 5444 but with a different solvent system and modified reaction conditions.

Generally, 1 eq of compound of formula (2) and about 1 eq to about 5 eq of an amine (e.g., tridecan-7-amine, pentadecan-8-amine, diisopropylaniline, aniline, 2-aminobenzamide, and naphthalene-1,8-diamine) are dissolved in a solvent. Preferred solvents are N-methyl-2-pyrrolidone (NMP), N,N-dimethylformamide (DMF), dimethylsulfoxide (DMSO), N,N-dimethylacetamide (DMAC), 1,3-dimethyl-2-imidazolidinone (DMI), N,N'-dimethylpropyleneurea (DMPU), toluene and xylene as well as mixtures thereof.

In order to avoid a possible reaction between the bromo-substituents of the compounds of formula (2) and formula (3) and amines (R'-NH₂ and Z'-NH₂), fatty acids such as formic acid, acetic acid, and propionic acid may be added to the reaction mixture.

The reaction mixture is then stirred and heated to a temperature of about 90 to about 210 °C for about 3 h to about 36 h. Subsequently, the solvent(s) of the reaction mixture is (are) removed via distillation under vacuum, or in case the compounds of formulae (4a)/(4b) precipitate from the reaction mixtures the separation is effected by filtration.

The raw product of formulae (4a)/(4b) is washed with water, subsequently with alcohol and recrystallized (from solutions of the compounds in an aromatic solvent, e.g., chlorobenzene, toluene or other polar solvents like NMP or sulfuric acid).

In a further subsequent step said mixture of compounds of the formulae (3) and (4a)/(4b) is subjected to a coupling reaction, in the presence of a Cu-based catalyst (temperature of the reaction mixture is about 60 °C to about 180 °C) to yield the polyparaperylene compound of formulae (IIa) and (IIb) 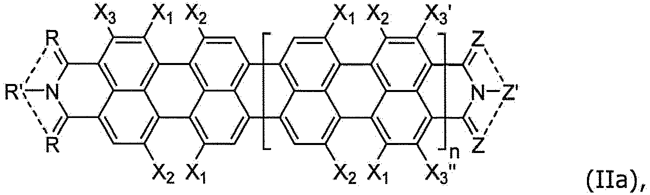 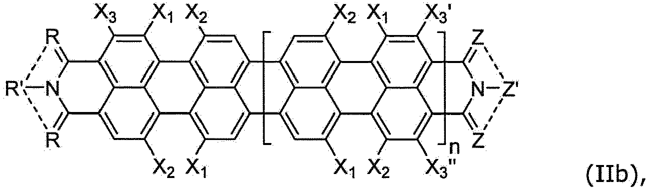 as defined in detail above already.

The compound of formulae (IIa) and (IIb) may be a mixture and synthesized using a coupling reaction like the one disclosed in CN 104418856 A (n = 1), but with a cheaper and more environmental friendly catalyst system and much higher reaction yields.

Using Ullmann coupling conditions (as generally set out in the publication Chemical Society Reviews, 2014, page 3525) in the afore-described further subsequent step, the blend of compounds of formulae (3) and (4a)/(4b) (in total 2 eq) is added to a polar solvent such as NMP, DMF, DMSO, DMAC, DMI, and DMPU or a mixture thereof.

Furthermore, about 0.5 to about 20 eq (preferably about 2 eq) of a base such as K₂CO₃, Na₂CO₃, Cs₂CO₃, or NaOtBu, as well as about 0.5 to about 20 eq (preferably about 2 eq) of a copper catalyst selected from Cu(0), Cu(I) and Cu(II) are added. The copper catalysts may be used in the form of (specific examples for such catalysts are Cu powder, CuI, CuBr, CuCI, Cu₂O, CuO, CuI₂, Cu(OAc)₂, Cu(OTf)₂, CuBr₂, CuCl₂ and their complexes including ligands).

According to some embodiments, it is preferable to also use about 0.1 to about 2 eq (preferably about 1 eq) of metal salts such as KF, CsF, and K₃PO₄ and ligands such as phenanthroline, L-proline, neocuproine which may accelerate the reaction process and improve the reaction yields.

The reaction mixture is stirred at about 60 °C to about 180 °C for about 30 min to about 12 h. After completing the reaction, the reaction mixture is filtered at a temperature in the range of about 25 °C to about 100 °C to remove the insoluble components, such as the catalyst. The solvent is subsequently removed by distillation and the raw product is washed with alcohol, acid (e.g., 1 to 20 wt% of aqueous hydrochloride or sulfuric acid), as well as water, and recrystallized using polar solvents like NMP, DMSO, quinoline, or concentrated sulfuric acid.

Optionally, the resulting compound of formulae (IIa) and (IIb) may be reacted under Ullmann conditions as set out above in the presence of OH-, SH- and NH₂-containing compounds such as phenols, thiophenols and amines to yield the compound of formulae (Ia) and (Ib) 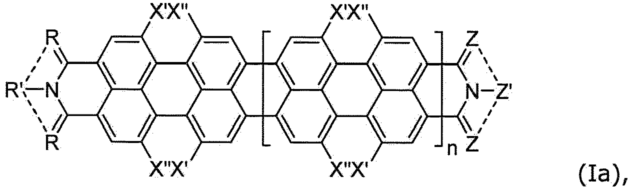 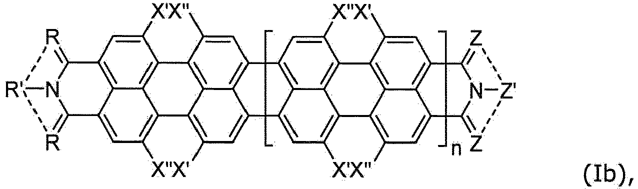 as defined in detail above already.

As noted above, the compound of formulae (Ia) and (Ib) are synthesized under the Ullmann conditions. A mixture of compound of formulae (IIa) and (IIb) (1 eq), the OH, SH and NH₂ containing compound(s) such as phenols, thiophenols and amines (about 10 eq), a carbonate base, such as K₂CO₃, Na₂CO₃, and Cs₂CO₃ (about 10 eq), as well as about 1 to about 10 eq of a copper catalyst (selected from Cu(0)-, Cu(I)- and Cu(II)-catalysts), and a polar solvent, such as NMP, DMF, DMSO, DMAC, DMI, DMPU, is stirred and heated up to about 60 °C to about 180 °C for about 0.5 h to about 12 h. The solvent is removed by distillation or in case the compound of formula (I) precipitates from the reaction mixtures the separation is effected by filtration. The raw material is washed with alcohol, acid (about 1 to about 20 wt% aqueous hydrochloride or sulfuric acid) and water.

For the brominating step of the compounds of formulae (2) and (3) preferably these compounds are essentially completely dissolved in alkaline water and converted to tetrametal salts which are then reacted to dimetal salts by adding an acid to the reaction mixture prior to reacting same with bromine. The acid is preferably selected from acids such as CH₃COOH, HCl, HBr, and H₃PO₄.

The bromine amount used is preferably about 2 to about 3 eq, more preferably about 2 to about 2.5 eq, most preferably about 2.1 eq, per 1 eq of 1,6,7,12-tetrachloro-perylene tetracarboxylic acid dianhydride of formula (1a) as shown above.

More preferably the reaction mixture resulting from the brominating step is directly subjected to the reaction with an amine (R'-NHz and Z'-NHz) without prior quenching of residual bromine.

In the process step for reacting the mixture of the compounds of formulae (4a)/(4b) and (3) with an amine (R'-NH₂ and Z'-NHz) the mixture of compounds of formulae (2) and (3) is preferably dissolved in a solvent selected from NMP, DMF, DMSO, DMAC, DMI, and DMPU, toluene and xylene as well as mixtures thereof.

Preferably the solution comprises about 1 to about 5 eq of the amine per 1 eq of the compound of formula (2).

More preferably, the solution comprises a fatty acid which is preferably selected from formic acid, acetic acid and propionic acid as well as mixtures thereof. The amount of fatty acid in the reaction mixtures preferably amounts depends on the amount of the solvent used in the reaction. The preferred volume ratio of acid and solvent is about 0.1:1 to about 10:1.

Preferably for the coupling reaction a Cu-based catalyst is selected from Cu(0)-, Cu(I)- and Cu(II)-based catalysts. Specific examples for such catalysts are Cu powder, CuI, CuBr, CuCI, CuzO, CuO, CuI₂, Cu(OAc)₂, Cu(OTf)₂, CuBr₂, CuCl₂ and their complexes including ligands.

Preferably said coupling reaction is carried out in a solution of the compounds of formulae (3) and (4), said solution comprising a polar solvent selected from NMP, DMF, DMSO, DMAC, DMI, and DMPU as well as mixtures thereof.

The compound of formulae (IIa) and (IIb) may be reacted with compounds comprising an OH-, SH- or NH₂-group, especially phenols, thiophenols and amines, to form a compound of formula (I), wherein at least part of the substituents X are different from halogen. These compounds may be in the form of a polymer, e.g., polyphenol, polyurethane containing phenol groups, polyester-polyamide hybrid polymers containing phenol and/or aniline groups.

Preferably, such reaction is carried out in the presence of a catalyst, said catalyst being preferably selected from Cu-catalysts (Cu powder, CuI, CuBr, CuCl, Cu₂O, CuO, CuI₂, Cu(OAc)₂, Cu(OTf)₂, CuBr₂, CuCl₂ and their complexes including ligands) and alkaline compounds (e.g. K₂CO₃, Cs₂CO₃, Na₂CO₃). During such reaction, the compound of formulae (IIa) and (IIb), respectively, is dissolved in a solvent which is preferably selected from NMP, DMF, DMSO, DMAC, DMI, and DMPU.

### EXPERIMENTAL

The present invention is set out in more detail in the following Examples which are set forth to illustrate certain aspects of the present invention and are not to be construed as limiting thereof.

### EXAMPLES:

### Example 1: Preparation of perylene based compound of formula (2a)

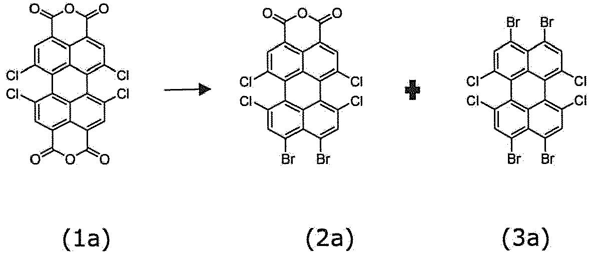

A mixture of 15 g (0.028 mol) of compound (1a) and 180 mL of an aqueous solution comprising 5 wt% NaOH (9.05 g; 0.23 mol) was stirred at 90 °C until compound (1a) was completely dissolved. 2.4 g (9.71 mL; 0.17 mol) of acetic acid (CH₃COOH) were then added to the reaction solution and stirred for 3 h.

Thereafter, 9.5 g (3.06 mL, 0.059 mol) of bromine were added dropwise over 30 min. The reaction mixture was vigorously stirred for another 30 min and a precipitate was collected via filtration and washed with water, subsequently with alcohol and then dried. The precipitate contained a mixture of compounds of formulae (2a) and (3a) as the reaction product (16 g, 95%). The reaction product comprises an amount of 90 to 99% of compound of formula (2a) and an amount of 10 to 1 % of compound of formula (3a).

The MALDI-TOF MS analysis results in m/z = 616.7, the molecular mass calculated for the compound of formula (2a) C₂₂H₄Br₂Cl₄O₃ amounts to 617.9.

### Example 2: Preparation of perylene based compound of formula (4a)

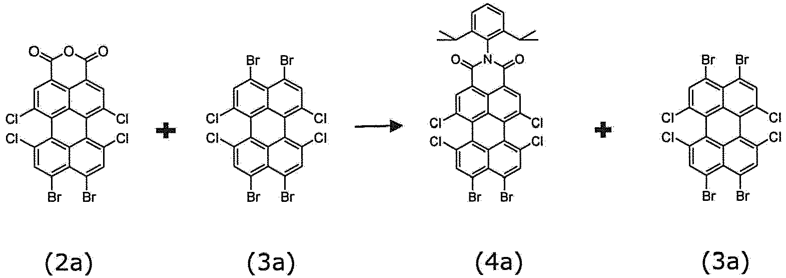

The mixture of 5 g (0.008 mol) of the blend of compounds of formulae (2a) and (3a) obtained in Example 1, 50 mL toluene, and 50 mL CH₃CH₂COOH was stirred at 140 °C for 1 h. Then 14.5 g of 2,6-diisopropylaniline (0.08 mol) was added to the reaction mixture and stirred overnight. The solvents were removed via distillation. The raw product was washed with water and subsequently with methanol to yield 5,5 g of a blend of compounds (3a) and (4a) (90%). The wt.-% ratio of the compounds (4a):(3a) is around 95:5.

The MALDI-TOF MS analysis results in m/z = 776.6, the molar mass calculated for the compound of formula (4a) C₃₄H₂₁Br₂Cl₄NO₂ amounts to 777.2.

### Example 3: Preparation of a polyparaperylene based compound of formula (IIc')

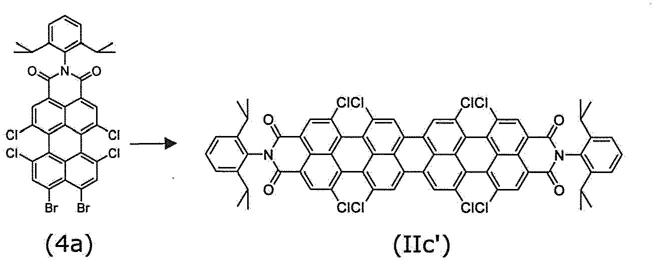

10 g of the mixture of compounds of formulae (4a) and (3a) (0.013 mol) as obtained in Example 2, K₂CO₃ (7.11 g, 0.051 mol), and copper powder (5 g, 0.079 mol) were mixed with 400 mL of DMSO and stirred at 120 °C for 1 h under nitrogen atmosphere. After filtration, the solvent was removed by distillation and the crude product was washed with 5 to 10 wt% aqueous hydrochloride acid, water, and subsequently with methanol to yield 7.9 g (99 %) of a green powder.

The MALDI-TOF MS analysis results in m/z = 1234.7, the molar mass calculated for the compound of formula (IIc') C₆₈H₄₂Cl₈N₂O₄ amounts to 1234.7.

### Example 4: Preparation of a polyparaperylene based compound of formula (IIIa)

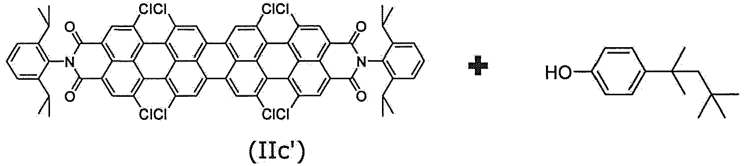

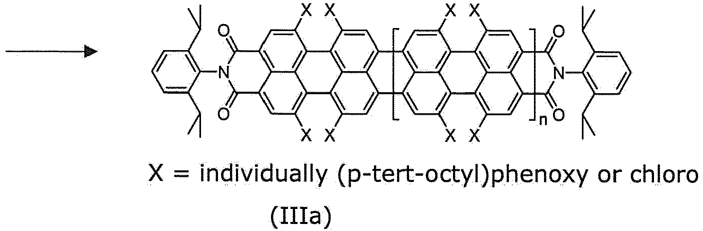

7.5 g of the compound of the formula (IIc') (0.006 mol), 4-tert-octylphenol (7.2 g, 0.06 mol), K₂CO₃ (8 g, 0.06 mol), and CuCl₂ (4 g, 0.03 mol) were added to 30 mL of DMSO, the mixture was stirred at 120 °C for 3 h. The solvent was removed by distillation. The crude product was washed with HCl and NaOH aqueous solution (5 to 10 wt%), water and methanol to give a green powder (13 g, 83%).

The MALDI-TOF MS analysis results in m/z = 1742.6, 1912,8, the molar mass calculated for the compound of formula (IIIa) C₁₁₀H₁₀₅Cl₅N₂O₇ amounts to 1744.3, C₁₂₄H₁₂₆Cl₄N₂O₈ amounts to 1914.2.

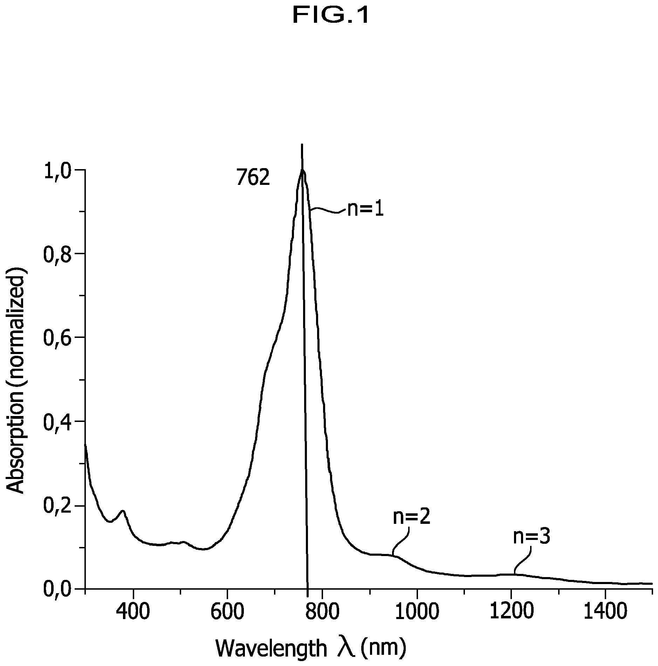

The UV-Vis-IR spectrum obtained from compound (IIIa) in a dichloromethane solution (10⁻⁵ mol/L) at 25 °C is shown in Figure 1. The main absorption maximum (n equals 1) is at λₘₐₓ = 762 nm. For compounds corresponding to formula (IIIa) wherein n equals 2 and 3, respectively, further maxima are detectable at longer wavelengths as indicated in Figure 1. The low intensity of absorption maximum peaks of compounds (n = 2 and n = 3) indicates the low amount of the compounds (n = 2 and n = 3) in the mixture of the reaction product.

### Example 5: Preparation of a polyparaperylene based compound of formula (IIIb)

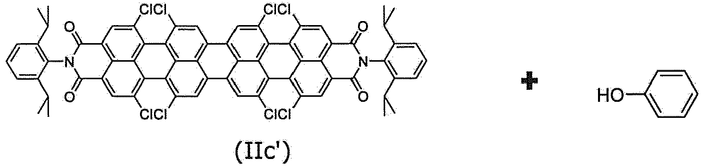

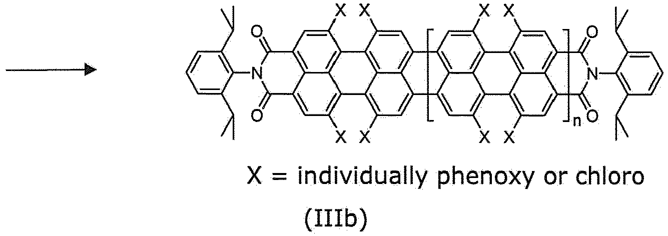

7.5 g of the compound of formula (IIc') (0.006 mol), phenol (5.7g, 0.06 mol), K₂CO₃ (8 g, 0.06 mol), and CuCl₂ (4 g, 0.03 mol) were added to 30 mL of DMSO, the mixture was stirred at 120 °C for 3 h. The solvent was removed by distillation. The crude product was washed with HCl and a NaOH (aqueous solutions, 5 to 10wt%) solution, water and methanol to give a green powder (10 g, 99%).

The MALDI-TOF MS analysis results in m/z = 1406.9, 1464.8, the molar mass calculated for the compound of formula (IIIb) C₈₆H₆₅₇Cl₅N₂O₇ amounts to 1407.7, C₉₂H₆₂Cl₄N₂O₈ amounts to 1465.3.

The UV-Vis-IR spectrum obtained from compound of formula (IIIb) in a dichloromethane solution(10⁻⁵ mol/L at 25 °C) shows an absorption maximum at λₘₐₓ = 764 nm.

### Example 6: Preparation of a polyparaperylene based compound (IIIc)

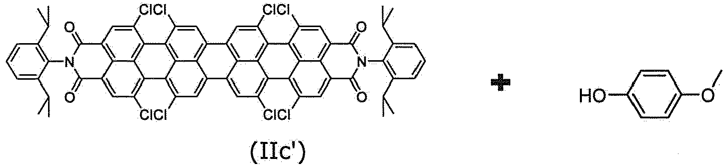

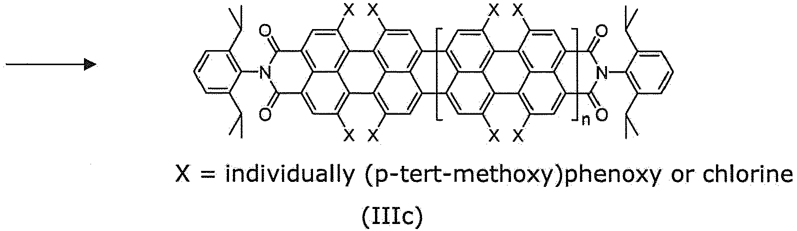

7.5 g of the compound of formula (IIc') (0.006 mol), 4-methoxyphenol (7.5 g, 0.06 mol), K₂CO₃ (8 g, 0.06 mol), and CuCl₂ (4 g, 0.03 mol) were added to 30 mL of DMSO, the mixture was stirred at 120 °C for 3 h. The solvent was removed by distillation. The crude product was washed with HCl and a NaOH solution (aqueous solution, 5 to 10 wt-%), water and methanol to give a green powder (11 g, 95%).

The MALDI-TOF MS analysis results in m/z = 1495.7, 1583.8, the molar mass calculated for the compound of formula (IIIc) C₈₉H₆₃Cl₅N₂O₁₀ amounts to 1497.7, C₉₆H₇₀Cl₄N₂O₁₂ amounts to 1585.4.

The UV-Vis-IR spectrum obtained from compound of formula (IIIc) in a dichloromethane solution (10⁻⁵ mol/L at 25 °C) shows an absorption maximum at λₘₐₓ = 762 nm.

### Example 7: Preparation of a polyparaperylene based compound of formula (IIId)

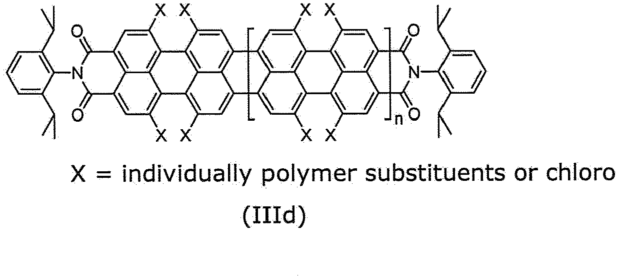

0.005 g of the compound of formula (IIc), 0.5 g of a sodium salt of the reaction product of hydroxybenzenesulfonic acid/formaldehyde/sulfonylbis-(phenol) (CAS90218-44-3), K₂CO₃ (0.01 g), and CuCl₂ (0.005 g) were added to 2 mL of DMSO, the mixture was stirred at 120 °C for 3 h. The solvent was removed by distillation. The crude product was washed with HCl and a NaOH solution, water and methanol to give a light green powder (0.5 g, 99 %).

The UV-Vis-IR spectrum obtained from compound (IIId) in a dichloromethane solution(10⁻⁵ mol/L at 25 °C) shows an absorption maximum at λₘₐₓ = 764 nm.

### Example 8: Preparation of a perylene based compound of formula (5a)

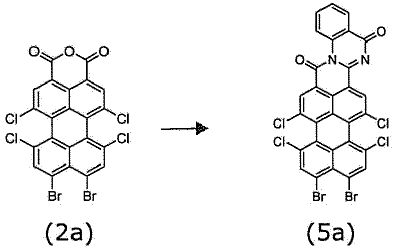

The mixture of 6.5 g (0.010 mol) of the blend of compounds of formulae (2a) and (3a) obtained in Example 1, 100 mL toluene, and 100 mL CH₃COOH was stirred at 140 °C for 1 h. Then 8 g of 2-aminobenzamide (0.059 mol) in 100 mL of toluene and CH₃COOH mixture (1:1) solvent was added into the reaction mixture and stirred overnight. The solvents were removed via distillation. The raw product was dissolved in 20 mL concentrated H₂SO₄ and stirred at 110 °C for 3 h. After cooling to room temperature, 180 mL water was slowly added. The precipitate was filtered and washed with water and subsequently with methanol to yield 7.1 g of compound (5a) (95 %).

The MALDI-TOF MS analysis results in m/z = 717.7, the molar mass calculated for the compound of formula (5a) C₂₉H₈Br₂Cl₄N₂O₂ amounts to 718.0.

The UV-Vis-IR spectrum of the compound of formula (5a) in DMSO shows an absorption maximum at λₘₐₓ = 530 nm.

### Example 9: Preparation of a polyparaperylene based compound of formula (IV)

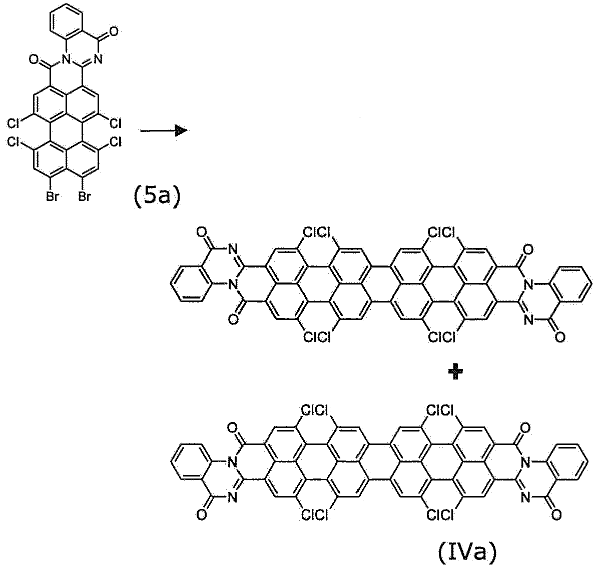

500 mg of the mixture of compounds of formulae (4a) and (3a) (0.007 mol) as obtained in Example 2, K₂CO₃ (0.385 g, 0.028 mol), and copper powder (0.177 g, 0.028 mol) were mixed with 30 mL of DMSO and stirred at 120 °C for 3 h under nitrogen atmosphere. After filtration, the solvent was removed by distillation and the crude product was washed with water and subsequently with methanol to yield 230 mg (60 %) of a green powder.

The MALDI-TOF MS analysis results in m/z = 1115.8, the molecular mass calculated for the compound of formula (IVa) C₅₈H₁₆Cl₈N₄O₂ amounts to 1116.4.

### Example 10: Preparation of a perylene based compound of formula (6a)

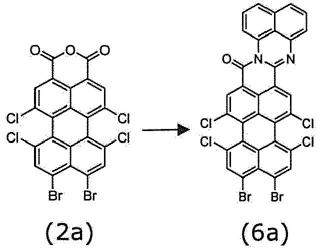

The mixture of 7.5 g (0.012 mol) of the blend of compounds of formulae (2a) and (3a) obtained in Example 1, 100 mL toluene, and 100 mL CH₃COOH was stirred at 140 °C for 1 h. Then 9.6 g of naphthalene-1,8-diamine (0.061 mol) in 100 mL of toluene and CH₃COOH mixture (1:1) solvent was added into the reaction mixture and stirred overnight. The solvents were removed via distillation. The raw product was dissolved in 20 mL concentrated H₂SO₄ and stirred at 110 °C for 3 h. After cooling to room temperature, 180 mL water was slowly added. The precipitate was filtered and washed with water and subsequently with methanol to yield 7.8 g of compound of formula (6a) (87%).

The MALDI-TOF MS analysis results in m/z = 739.6, the molecular mass calculated for the compound of formula (6a) C₃₂H₁₀Br₂Cl₄N₂O amounts to 740.0.

### Example 11: Preparation of a polyparaperylene based mixtures of compounds of formula (V)

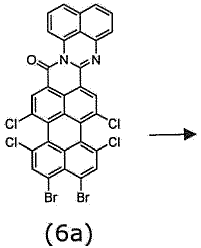

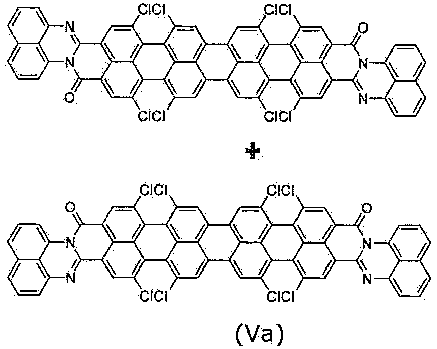

4.25 g of the mixture of compounds of formulae (4a) and (3a) (0.006 mol) as obtained in Example 2, K₂CO₃ (3.5 g, 0.025 mol), and copper powder (5 g, 0.079 mol) were mixed with 600 mL of DMSO and stirred at 120 °C for 6 h under nitrogen atmosphere. After filtration, the solvent was removed by distillation and the crude product was washed with water and subsequently with methanol to yield 2.7 g (80%) of a green powder.

The MALDI-TOF MS analysis results in m/z = 1159.8, the molecular mass calculated for the compound of formula (Va) C₆₄H₂₀Cl₈N₄O₂ amounts to 1160.5.

The UV-Vis-IR spectrum of the compound of formula (Va) in DMSO shows an absorption maximum at λₘₐₓ = 920 nm.

### Example 12: Elimination of the chlorine substituents

The following example provides guidance as to how eliminate residual chlorine substituents from the inventive polyparaperylene compounds if desired.

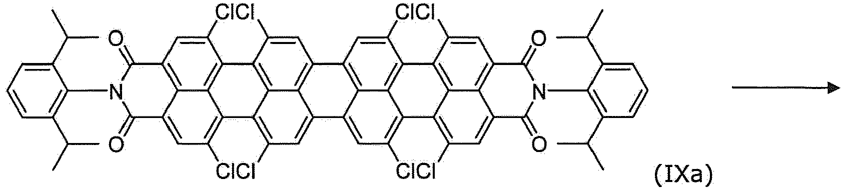

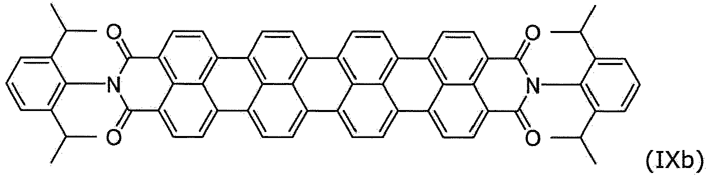

To a hot solution (temperature in the range of about 100 °C to about 200 °C, e.g., 170 °C) of sodium hydroxide (10 g) in 100 ml ethylene glycol (at 170 °C), 2 g of the compound of formula (IXa) were added and the mixture was stirred for about 2 h at the same temperature. The reaction mixture was cooled down to room temperature and neutralized with hydrochloric acid. The suspension thus obtained was filtered, the filtrate washed with water and dried. The crude product was suspend and stirred vigorously in 50 ml dichloromethane for about 1 h. The precipitate was collected by filtration and dried to yield 1.8 g (90%) of formula (IXb) as a green solid.

## Claims

1. A process for preparing a polyparaperylene based compound the process comprising a step of brominating a perylene tetracarboxylic acid dianhydride of formula (1) 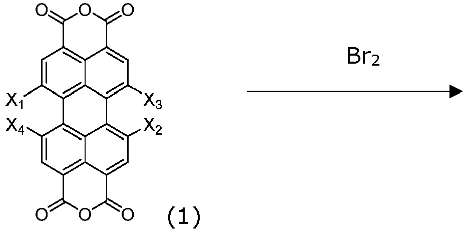
wherein X₁, X₂, X₃, X₄, equal C!, Cl, H, H, respectively, or C!, Cl, Cl, Cl; to yield a reaction mixture of brominated perylene compounds of the formulae (2) and (3) 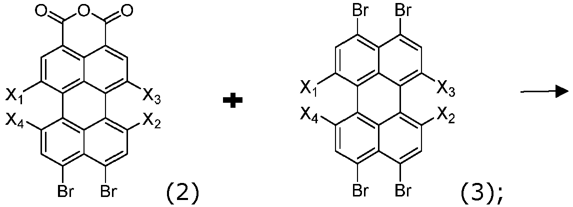
wherein in compounds (2) and (3) X₁, X₂, X₃, X₄, equal C!, Cl, H, H, respectively, or C!, Cl, Cl, Cl;
subsequently subjecting said mixture of compounds of the formulae (2) and (3) to a reaction with aliphatic or aromatic amines R'-NH₂ and Z'-NH₂ in a solvent to yield the compounds of formulae (4a), (4b) and (3), said R'-NH₂ and Z'-NH₂ optionally containing one or two additional -NH₂ groups or -CH₃ groups, 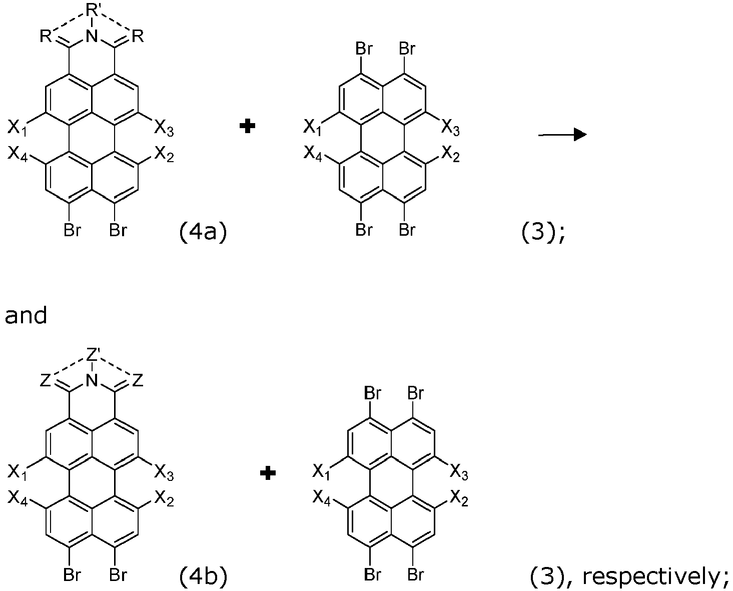
wherein in the compounds of formulae (4a) and (4b) R and Z, respectively, individually represents O, N or CH; and wherein R' and Z', respectively, individually represent
(i) C₁-C₂₃-alkyl including linear, branched, cyclic, dendritic alkyl groups, and/or alkyl groups interrupted by a single or multiple moieties selected from -O-, -S-, -NR¹-, -COO-, -CO-, -CR¹=CR¹- , -N=CR¹-, -C=C-, -SO-, -SO₂-, -OP=OOR¹O-, -OSi(OR¹)₂O-, -Si(R¹)₂O-, -Si(R¹)₂OSi(R¹)₂-, and/or -CONR¹-, which may be mono- or multi-substituted by: hydroxyl, thiol, halogen, nitro, -NR¹R², -CON(R¹)₂, -NR¹COR², -SO₂N(R¹)₂, -COOR¹, -SO₃R¹, -PO(R¹)₂;
(ii) aryl which may be mono- or multi-substituted by C₁-C₂₀-alkyl, C₁-C₂₀-alkoxy, cyano, -COOR¹, alkylketone, -CON(R¹)₂, nitro, alkylthio, alkylsulfonate, alklysiloxane, aryl, and/or heteroaryl, which may each be mono- or multi-substituted by C₁-C₁₀-alkyl, C₁-C₁₀-alkoxy;
wherein R¹ and R² represent identical or different aryl groups, or C₁-C₈-alkyl or -alkoxy linear or branched chains; or
wherein when R'-NH₂ and Z'-NH₂ contain in addition one or two -NH₂ groups or -CH₃ groups, R or Z being N or CH form a part of an additional ring formation obtained by a condensation reaction between NH₂/CH₃ groups as part of R'-NH₂ as well as Z'-NH₂ and C=O groups of formula (2) releasing one H₂O;
subsequently subjecting said mixture of compounds of the formulae (3) and (4a), (3) and (4b), or (3) and (4a) and 4(b) to a coupling reaction in the presence of a Cu-based catalyst in DMSO at a temperature of about 60 °C to about 180 °C to yield the polyparaperylene compound of formulae (IIa) and (IIb), respectively, 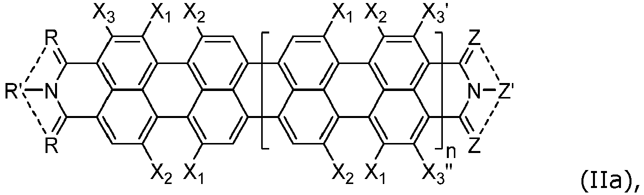 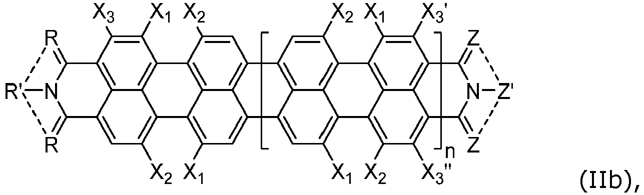
wherein the Cu-based catalyst comprises per 2 eq of the compounds of formulae (3) and (4a), (3) and (4b), and (3), (4a) and (4b), respectively, 0.5 eq to 20 eq of a Cu(0)-copper and 0.5 eq to 20 eq of a base, said base being selected from K₂CO₃, Cs₂CO₃ and Na₂CO₃;
wherein n is 1, 2 or 3;
wherein R and Z are independently selected from O, N or CH;
wherein X₃, X₃' and X₃" are hydrogen, when X₁=Cl and X₂=H or X₁=X₂=Cl.

2. The process of claim 1, wherein the compound of formulae (IIa) and (IIb) is reacted under Ullmann conditions in the presence of OH-, SH- and NH₂-containing compounds to yield the compound of formulae (Ia) and (Ib) 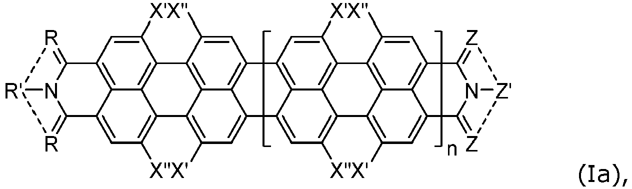 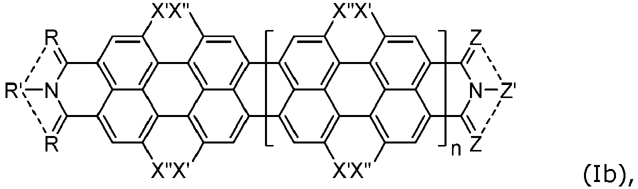
wherein n is 1, 2 or 3;
wherein R and Z are identical or different radicals selected from O, S, N, and CH;
wherein optionally R' and Z' and one or two of R and Z, respectively, represent together a cyclic moiety as represented by the broken lines in formulae (Ia) and (Ib), said cyclic moiety being individually and preferably selected from aliphatic, aromatic, hetero-aliphatic and heteroaromatic moieties, wherein, where applicable, preferably the heteroatom(s) is (are) independently selected from O and N;
wherein X' and X" are independently selected from hydrogen; chlorine; alkoxyl, aryloxy, heteroaryloxy, alkylthio, arylthio, heteroarylthio, alkylamino, arylamino, or heteroarylamino, each of which may be subsitituted by C₁-C₁₂-alkyl or C₁-C₁₂-alkoxy; and a polymer containing an alkyloxy or alkylthio group.

3. The process of claim 1 or 2, wherein in the brominating step the compounds of formulae (2) and (3) are essentially completely dissolved in alkaline water and converted to tetrametal salts which are then reacted to dimetal salts by adding an acid to the reaction mixture prior to reacting same with bromine.

4. The process of any one of claims 1 to 3, wherein an amount of about 2 to about 3 equivalents, preferably about 2 to about 2.5 equivalents, of bromine per 1 equivalent of a perylene tetracarboxylic acid dianhydride of formula (1) is used and preferably the reaction mixture resulting from the brominating step is directly subjected to the reaction with the amine without prior quenching of bromine.

5. The process of any one of claims 1 to 4, wherein the mixture of compounds of formulae (2) and (3) is dissolved in the step of reacting the compounds of formulae (4) and (3) with an amine in a solvent selected from NMP, DMF, DMSO, DMAC, DMI, DMPU, toluene and xylene as well as mixtures thereof; preferably wherein the solution comprises about 1 to about 5 equivalents of the amine per 1 equivalent of the compound of formula (2); more preferably wherein the solution comprises a fatty acid which is preferably selected from formic acid, acetic acid and propionic acid as well as mixtures thereof.

6. The process of any one of claims 1 to 5, wherein said coupling reaction is carried out in a solution of the compounds of formulae (4) and (3).

7. The process of any one of claims 1 to 6, wherein the compound of formulae (IIa) and (IIb), respectively, is reacted with compounds comprising a OH-, SH- or NHz-group, especially phenols, thiophenols and amines, preferably in the presence of a catalyst to form a compound of formulae (Ia) and (Ib), respectively.

8. The process of claim 7, wherein said catalyst is selected from Cu-catalysts and alkaline compounds.

## Patentansprüche

1. Verfahren zur Herstellung einer Verbindung auf Basis von Polyparaperylen, wobei das Verfahren einen Bromierungsschritt eines Perylentetracarbonsäuredianhydrids der folgenden Formel (1) umfasst: 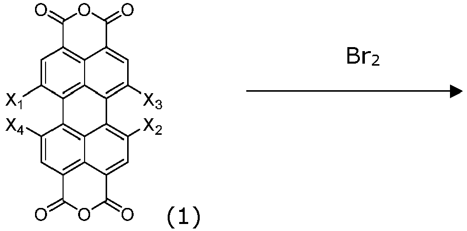
worin X₁, X₂, X₃, X₄ jeweils gleich Cl, Cl, H, H oder Cl, Cl, Cl, Cl sind;
um eine Reaktionsmischung von bromierten Perylenverbindungen der folgenden Formeln (2) und (3) zu ergeben: 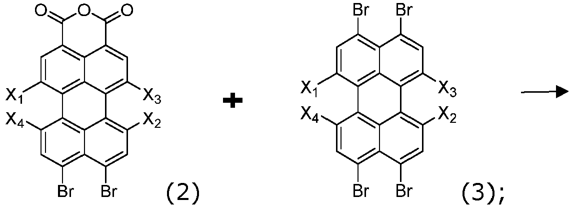
wobei in den Verbindungen (2) und (3) X₁, X₂, X₃, X₄ jeweils gleich Cl, Cl, H, H oder Cl, Cl, Cl, Cl sind;
gefolgt von Unterwerfen der Mischung von Verbindungen der Formeln (2) und (3) einer Reaktion mit aliphatischen oder aromatischen Aminen R'-NH₂ und Z'-NH₂ in einem Lösemittel, um die Verbindungen der folgenden Formeln (4a), (4b) und (3) zu ergeben, wobei R'-NH₂ und Z'-NH₂ optional eine oder zwei zusätzliche -NH₂-Gruppen oder -CH₃-Gruppen enthalten, 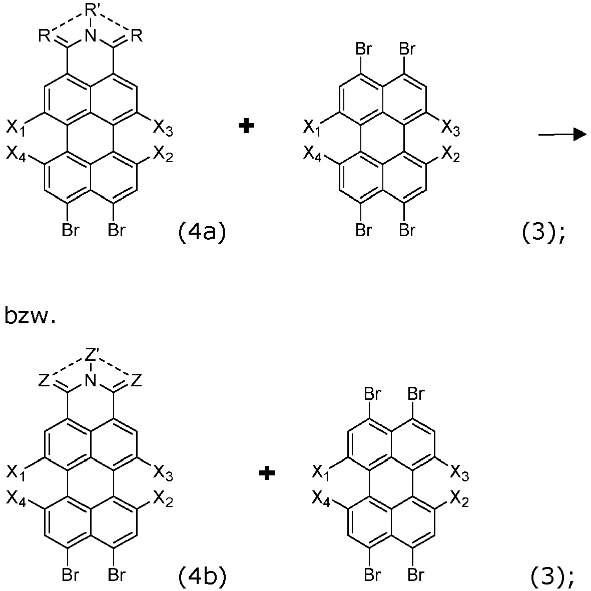
wobei in den Verbindungen der Formeln (4a) und (4b) R und Z jeweils einzeln O, N oder CH repräsentieren; und wobei R' und Z' jeweils einzeln Folgendes repräsentieren:
(i) C₁-C₂₃-Alkyl, umfassend lineare, verzweigte, cyclische, dendritische Alkylgruppen und/oder Alkylgruppen, welche von einer oder mehreren Gruppen unterbrochen sind, die ausgewählt sind aus -O-, -S-, -NR¹-, -COO-, -CO-, -CR¹=CR¹-, -N=CR¹-, -C≡C-, -SO-, -SO₂-, -OP=OOR¹O-, -OSi(OR¹)₂O-, -Si(R¹)₂O-, -Si(R¹)₂OSi(R¹)₂- und/oder -CONR¹-, welche ein- oder mehrfach substituiert sein können mit: Hydroxyl, Thiol, Halogen, Nitro, -NR¹R², -CON(R¹)₂, -NR¹COR², -SO₂N(R¹)₂, -COOR¹, -SO₃R¹, -PO(R¹)₂;
(ii) Aryl, welches ein- oder mehrfach substituiert sein kann mit C₁-C₂₀-Alkyl, C₁-C₂₀-Alkoxy, Cyano, -COOR¹, Alkylketon, -CON(R¹)₂, Nitro, Alkylthio, Alkylsulfonat, Alkylsiloxan, Aryl und/oder Heteroaryl, welche jeweils ein- oder mehrfach substituiert sein können mit C₁-C₁₀-Alkyl, C₁-C₁₀-Alkoxy;
worin R¹ und R² gleiche oder verschiedene Arylgruppen oder lineare oder verzweigte C₁-C₈-Alkyl- oder -Alkoxyketten repräsentieren; oder wobei, wenn R'-NH₂ und Z'-NH₂ zusätzlich eine oder zwei -NH₂-Gruppen oder -CH₃-Gruppen enthalten, R oder Z, welche N oder CH sind, einen Teil einer zusätzlichen Ringbildung bilden, welche erhalten wird über eine Kondensationsreaktion zwischen NH₂/CH₃-Gruppen als Teil von R'-NH₂ sowie Z'-NH₂ und C=O-Gruppen der Formel (2) unter Freisetzung eines H₂O; gefolgt von Unterwerfen der Mischung von Verbindungen der Formeln (3) und (4a), (3) und (4b) oder (3) und (4a) und 4(b) einer Kupplungsreaktion in Gegenwart eines Cu-basierten Katalysators in DMSO bei einer Temperatur von ca. 60 °C bis ca. 180 °C, um die Polyparaperylenverbindung der folgenden Formeln (IIa) bzw. (IIb) zu ergeben: 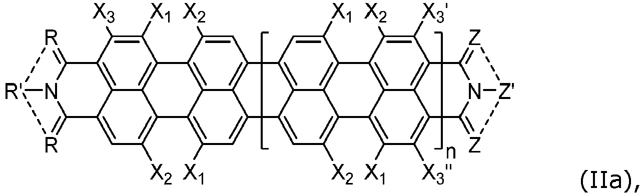 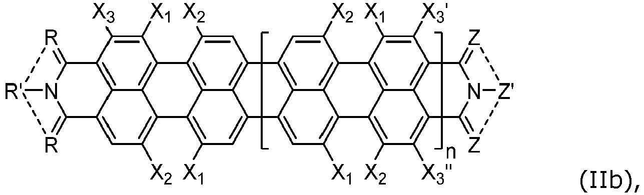
wobei der Cu-basierte Katalysator pro 2 Äquivalente der Verbindungen der Formeln (3) und (4a), (3) und (4b) und (3), (4a) und (4b) jeweils 0,5 Äquivalente bis 20 Äquivalente eines Cu(0)-Kupfers und 0,5 Äquivalente bis 20 Äquivalente einer Base umfasst, wobei die Base ausgewählt ist aus K₂CO₃, Cs₂CO₃ und Na₂CO₃;
worin n 1, 2 oder 3 ist;
worin R und Z unabhängig voneinander ausgewählt sind aus O, N oder CH;
worin X₃, X₃' und X₃" Wasserstoff sind, wenn X₁=Cl und X₂=H oder X₁=X₂=Cl sind.

2. Verfahren nach Anspruch 1, wobei die Verbindung der Formeln (IIa) und (IIb) unter Ullmann-Bedingungen in Gegenwart von OH-, SH- und NH₂-haltigen Verbindungen zur Reaktion gebracht wird, um die Verbindung der folgenden Formeln (Ia) und (Ib) zu ergeben: 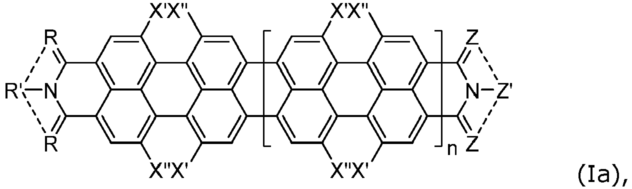 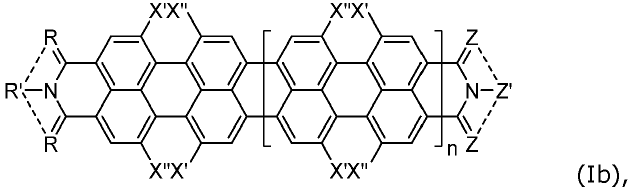
worin n 1, 2 oder 3 ist;
worin R und Z gleiche oder verschiedene Reste sind, ausgewählt aus O, S, N und CH;
wobei optional R' und Z' und einer oder zwei von den Resten R und Z jeweils zusammen eine cyclische Gruppe repräsentieren, wie durch die durchbrochenen Linien in den Formeln (Ia) und (Ib) repräsentiert, wobei die cyclische Gruppe individuell und vorzugsweise ausgewählt ist aus aliphatischen, aromatischen, heteroaliphatischen und heteroaromatischen Gruppen, wobei gegebenenfalls vorzugsweise das/die Heteroatom/e unabhängig voneinander aus O und N ausgewählt ist/sind;
wobei X' und X" unabhängig voneinander ausgewählt sind aus Wasserstoff; Chlor; Alkoxyl, Aryloxy, Heteroaryloxy, Alkylthio, Arylthio, Heteroarylthio, Alkylamino, Arylamino oder Heteroarylamino, von denen jedes mit C₁-C₁₂-Alkyl oder C₁-C₁₂-Alkoxy substituiert sein kann; und einem Polymer, welches eine Alkyloxy- oder Alkylthiogruppe enthält.

3. Verfahren nach Anspruch 1 oder 2, wobei in dem Bromierungsschritt die Verbindungen der Formeln (2) und (3) im Wesentlichen vollständig in alkalischem Wasser gelöst und in Tetrametallsalze umgesetzt werden, welche dann zu Dimetallsalzen umgesetzt werden durch Zugabe einer Säure zu der Reaktionsmischung, bevor diese mit Brom umgesetzt wird.

4. Verfahren nach einem der Ansprüche 1 bis 3, wobei eine Menge von ca. 2 bis ca. 3 Äquivalenten, vorzugsweise ca. 2 bis ca. 2,5 Äquivalenten, von Brom pro 1 Äquivalent von einem Perylentetracarbonsäuredianhydrid der Formel (1) verwendet wird und vorzugsweise die aus dem Bromierungsschritt resultierende Reaktionsmischung direkt der Reaktion mit dem Amin, ohne vorheriges Quenchen des Broms, unterworfen wird.

5. Verfahren nach einem der Ansprüche 1 bis 4, wobei die Mischung von Verbindungen der Formeln (2) und (3) in dem Schritt des Umsetzens der Verbindungen der Formeln (4) und (3) mit einem Amin in einem Lösemittel, welches ausgewählt ist aus NMP, DMF, DMSO, DMAC, DMI, DMPU, Toluol und Xylol sowie Mischungen davon, gelöst wird; wobei vorzugsweise die Lösung ca. 1 bis ca. 5 Äquivalente des Amins pro 1 Äquivalent der Verbindung der Formel (2) umfasst; wobei weiter bevorzugt die Lösung eine Fettsäure umfasst, welche vorzugsweise ausgewählt ist aus Ameisensäure, Essigsäure und Propionsäure sowie Mischungen hiervon.

6. Verfahren nach einem der Ansprüche 1 bis 5, wobei die Kupplungsreaktion in einer Lösung der Verbindungen der Formeln (4) und (3) durchgeführt wird.

7. Verfahren nach einem der Ansprüche 1 bis 6, wobei die Verbindung der Formeln (IIa) bzw. (IIb) mit Verbindungen umgesetzt wird, welche eine OH-, SH- oder NH₂-Gruppe enthalten, insbesondere Phenole, Thiophenole und Amine, vorzugsweise in Gegenwart eines Katalysators, um eine Verbindung der Formeln (Ia) bzw. (Ib) zu bilden.

8. Verfahren nach Anspruch 7, wobei der Katalysator ausgewählt ist aus Cu-Katalysatoren und alkalischen Verbindungen.

## Revendications

1. Procédé pour la préparation d'un composé à base de polyparapérylène le procédé comprenant une étape de bromation d'un dianhydride d'acide pérylènetétracarboxylique de formule (1) 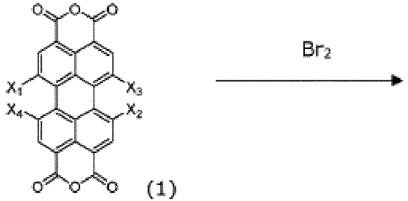
où X₁, X₂, X₃, X₄, sont Cl, Cl, H, H, respectivement, ou Cl, Cl, Cl, Cl ;
pour produire un mélange réactionnel de composés de pérylène bromés des formules (2) et (3) 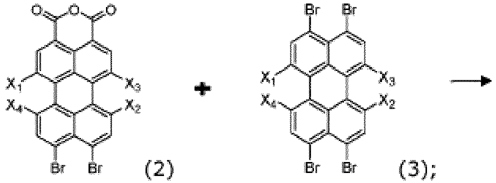
où dans les composés (2) et (3) X_{1,} X₂, X₃, X₄ sont Cl, Cl, H, H, respectivement, ou Cl, Cl, Cl, Cl ;
soumission subséquente dudit mélange de composés des formules (2) et (3) à une réaction avec des amines aliphatiques ou aromatiques R'-NH₂ et Z'-NH₂ dans un solvant pour produire les composés des formules (4a), (4b) et (3), lesdits R'-NH₂ et Z'-NH₂ contenant éventuellement un ou deux groupes -NH₂ ou groupes -CH₃ supplémentaires, 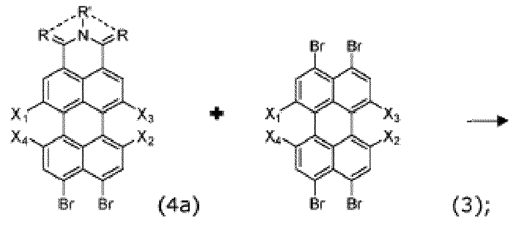 et 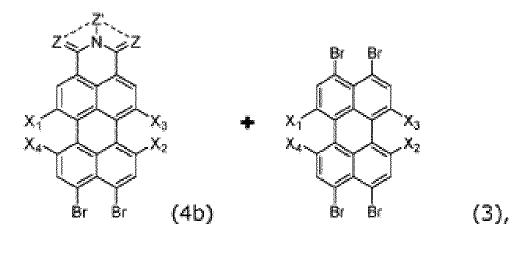 respectivement ;
où dans les composés des formules (4a) et (4b) R et Z, respectivement, représentent individuellement O, N ou CH ; et où R' et Z', représentent respectivement, individuellement
(i) un alkyle en C₁-C₂₃ incluant des groupes alkyle linéaires, ramifiés, cycliques, dendritiques, et/ou des groupes alkyle interrompus par une seule moitié ou des moitiés multiples choisies parmi -O-, -S-, -NR¹-, -COO-, -CO-, -CR¹=CR¹-, -N=CR¹-, -C≡C-, -SO-, -SO₂-, -OP=OOR¹O-, -OSi(OR¹)₂O-, -Si(R¹)₂O-, -Si(R¹)₂OSi(R¹)₂-, et/ou -CONR¹-, qui peuvent être mono- ou multi-substitués par : hydroxyle, thiol, halogène, nitro, -NR¹R², -CON(R¹)₂, -NR¹COR², -SO₂N(R¹)₂, -COOR¹, -SO₃R¹, -PO(R¹)₂ ;
(ii) aryle qui peut être mono- ou multi-substitué par un alkyle en C₁-C₂₀, alcoxy en C₁-C₂₀, cyano, -COOR¹, alkylcétone, -CON(R¹)₂, nitro, alkylthio, sulfonate d'alkyle, alkylsiloxane, aryle, et/ou hétéroaryle, qui peuvent être chacun mono- ou multi-substitués par un alkyle en C₁-C₁₀, alcoxy en C₁-C₁₀ ;
où R¹ et R² représentent des groupes aryle identiques ou différents, ou des chaînes linéaires ou ramifiées alkyle ou alcoxy en C₁-C₈; ou
où lorsque R'-NH₂ et Z'-NH₂ contiennent de plus un ou deux groupes -NH₂ ou groupes -CH₃, R ou Z étant N ou CH forment une partie d'une formation de cycle supplémentaire obtenue par une réaction de condensation entre des groupes NH₂/CH₃ comme une partie de R'-NH₂ ainsi que Z'-NH₂ et des groupes C=O de formule (2) libérant un H₂O ; soumission subséquente dudit mélange de composés des formules (3) et (4a), (3) et (4b), ou (3) et (4a) et 4(b) à une réaction de couplage en présence d'un catalyseur à base de Cu dans DMSO à une température d'environ 60°C à environ 180°C pour produire le composé de polyparapérylène de formules (IIa) et (IIb), respectivement, 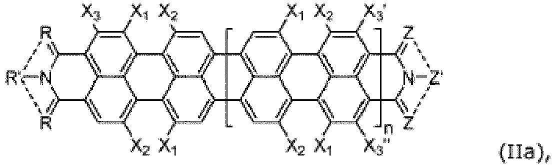 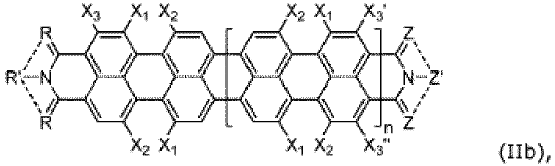
où le catalyseur à base de Cu comprend 2 eq des composés des formules (3) et (4a), (3) et (4b), et (3), (4a) et (4b), respectivement, de 0,5 eq à 20 eq d'un cuivre-Cu(0) et 0,5 eq à 20 eq d'une base, ladite base étant choisie parmi K₂CO₃, Cs₂CO₃ et Na₂CO₃ ;
où n est égal à 1, 2 ou 3 ;
où R et Z sont indépendamment choisis parmi O, N ou CH ;
où X₃, X₃' et X₃" sont l'hydrogène, lorsque X₁=Cl et X₂=H ou X₁=X₂=Cl.

2. Procédé selon la revendication 1, où le composé des formules (IIa) et (IIb) réagit dans des conditions de Ullmann en présence de composés contenant OH-, SH- et NH₂- pour produire le composé des formules (Ia) et (Ib) 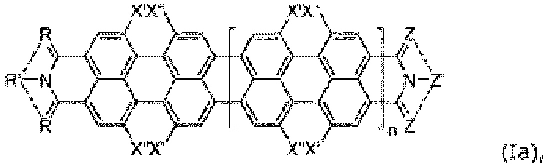 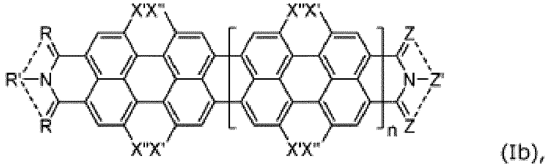
où n est égal à 1, 2 ou 3 ;
où R et Z sont des radicaux identiques ou différents choisis parmi O, S, N et CH ;
où éventuellement R' et Z' et un ou deux de R et Z, respectivement, représentent ensemble une moitié cyclique comme représenté par les lignes en pointillés dans les formules (Ia) et (Ib), ladite moitié cyclique étant individuellement et de préférence choisie parmi des moitiés aliphatiques, aromatiques, hétéro-aliphatiques et hétéro-aromatiques, où, quant applicable, le(les) hétéroatome(s) est(sont) de préférence indépendamment choisi(s) parmi O et N ;
où X' et X" sont indépendamment choisis parmi
hydrogène ; chlore ; alcoxyle, aryloxy, hétéroaryloxy, alkylthio, arylthio, hétéroarylthio, alkylamino, arylamino, ou hétéroarylamino, dont chacun peut être substitué par un alkyle en C₁-C₁₂ ou alcoxy en C₁-C₁₂ ; et un polymère contenant un groupe alkyloxy ou alkylthio.

3. Procédé selon la revendication 1 ou 2, où dans l'étape de bromation les composés des formules (2) et (3) sont essentiellement complètement dissous dans de l'eau alcaline et convertis en sels de tétramétaux qui réagissent ensuite en sels de dimétaux par addition d'un acide au mélange réactionnel avant la réaction de ceux-ci avec du brome.

4. Procédé selon l'une quelconque des revendications 1 à 3, où une quantité d'environ 2 à environ 3 équivalents, de préférence d'environ 2 à environ 2,5 équivalents, de brome pour 1 équivalent d'un dianhydride d'acide pérylènetétracarboxylique de formule (1) est utilisée et le mélange réactionnel résultant de l'étape de bromation est de préférence directement soumis à la réaction avec l'amine sans extinction préalable de brome.

5. Procédé selon l'une quelconque des revendications 1 à 4, où le mélange de composés des formules (2) et (3) est dissous dans l'étape de réaction des composés des formules (4) et (3) avec une amine dans un solvant choisi parmi NMP, DMF, DMSO, DMAC, DMI, DMPU, toluène et xylène ainsi que des mélanges de ceux-ci ; de préférence dans lequel la solution comprend d'environ 1 à environ 5 équivalents de l'amine pour 1 équivalent du composé de formule (2) ; encore mieux où la solution comprend un acide gras qui est de préférence choisi parmi l'acide formique, l'acide acétique et l'acide propionique ainsi que des mélanges de ceux-ci.

6. Procédé selon l'une quelconque des revendications 1 à 5, où ladite réaction de couplage est réalisée dans une solution des composés des formules (4) et (3).

7. Procédé selon l'une quelconque des revendications 1 à 6, où le composé des formules (IIa) et (IIb), respectivement, réagit avec des composés comprenant un groupe OH-, SH- ou NH₂-, particulièrement des phénols, thiophénols et amines, de préférence en présence d'un catalyseur pour former un composé des formules (Ia) et (Ib), respectivement.

8. Procédé selon la revendication 7, où ledit catalyseur est choisi parmi des catalyseurs de Cu et des composés alcalins.
